# EUROPEAN PATENT APPLICATION

(11) **EP 4 586 562 A1**
(43) Date of publication of application: **16.07.2025**
(21) Application number: 22957639.2
(22) Date of filing: 05.09.2022
(51) Int. Cl.: H04L 27/00, H04W 76/00, H04W 4/00

(54) **COMMUNICATION METHOD, AND ELECTRONIC DEVICE AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/117057
(87) International publication number: WO 2024/050663

(57) **Abstract**

The embodiments of the present disclosure relate to the technical field of mobile communications. Provided are a communication method, and an electronic device and a storage medium. The communication method is applied to a mobile access point multi-link device (AP MLD). The method comprises: determining a first radio frame, wherein the first radio frame comprises first indication information, and the first indication information indicates that an AP MLD supports a plurality of non-simultaneous transmitting and receiving (NSTR) connection pairs; and transmitting the first radio frame. The embodiments of the present disclosure provide a way to indicate the number of NSTR connection pairs supported by an NSTR mobile AP MLD.

## Description

### TECHNICAL FIELD

The embodiments of the present disclosure relate to the technical field of mobile communication, and in particular, to a communication method, an electronic device, and a storage medium.

### BACKGROUND

With the rapid development of mobile communication technology, wireless fidelity (Wi-Fi) technology has made great progress in transmission rate and throughput. At present, the content being researched of Wi-Fi technology, such as transmission in 320Mhz bandwidth, aggregation and coordination of a plurality of frequency bands, etc., has main application scenarios such as video transmission, augmented reality (AR), virtual reality (VR), etc.

Specifically, the aggregation and coordination of the plurality of frequency bands means that devices communicate with each other in 2.4GHz, 5.8GHz, 6GHz and other frequency bands at the same time. For the scenario where devices communicate with each other in a plurality of frequency bands at the same time, a new media access control (MAC) mechanism also needs to be defined for management. In addition, the aggregation and coordination of the plurality of frequency bands is expected to support low-latency transmission.

At present, the maximum bandwidth to be supported by multi-frequency bands aggregation and coordination technology is 320MHz (160MHz+160MHz). In addition, it may also support 240MHz (160MHz+80MHz) and other bandwidths supported by existing standards.

In the multi-connection (or link) scenario of the currently studied Wi-Fi technology, there is a non-simultaneous transmitting and receiving (NSTR) working mode, and an access point multi-link device (AP MLD) that supports NSTR is usually referred to as an NSTR mobile AP MLD. In the NSTR scenario, there is a need to provide a manner to indicate a number of NSTR link pairs supported by the NSTR mobile AP MLD.

### SUMMARY

The embodiments of the present disclosure provide a communication method, an electronic device, and a storage medium to provide a manner for indicating a number of NSTR link pairs supported by an NSTR mobile AP MLD.

In an aspect, an embodiment of the present disclosure provides a communication method, which is applied to an access point multi-link device (AP MLD), and the method includes:
determining a first radio frame, where the first radio frame includes first indication information, and the first indication information indicates that the AP MLD supports a plurality of non-simultaneous transmitting and receiving (NSTR) link pairs; and
sending the first radio frame.

In another aspect, an embodiment of the present disclosure further provides a communication method, which is applied to a multi-link station device (Non-AP MLD), and the method includes:
receiving a first radio frame, where the first radio frame includes first indication information, and the first indication information indicates that an access point multi-link device (AP MLD) supports a plurality of non-simultaneous transmitting and receiving (NSTR) link pairs.

In another aspect, an embodiment of the present disclosure further provides an electronic device, where the electronic device is an access point multi-link device (AP MLD), and the electronic device includes:
a determination module, configured to determine a first radio frame, where the first radio frame includes first indication information, and the first indication information indicates that the AP MLD supports a plurality of non-simultaneous transmitting and receiving (NSTR) link pairs; and
a sending module, configured to send the first radio frame.

In another aspect, an embodiment of the present disclosure further provides an electronic device, where the electronic device is a multi-link station device (Non-AP MLD), and the electronic device includes:
a receiving module, configured to receive a first radio frame, where the first radio frame includes first indication information, and the first indication information indicates that an access point multi-link device (AP MLD) supports a plurality of non-simultaneous transmitting and receiving (NSTR) link pairs.

An embodiment of the present disclosure further provides an electronic device, including a memory, a processor, and a computer program stored in the memory and runnable on the processor, where the processor, when executing the program, implements one or more of the methods described in the embodiments of the present disclosure.

An embodiment of the present disclosure further provides a computer-readable storage medium, and a computer program is stored in the computer-readable storage medium, and the computer program, when being executed by a processor, implements one or more of the methods described in the embodiments of the present disclosure.

In the embodiments of the present disclosure, in a scenario where a plurality of links are established, an NSTR mobile AP MLD determines a first radio frame, includes first indication information in the first radio frame, and indicates that the AP MLD supports a plurality of NSTR link pairs via the first indication information. The embodiments of the present disclosure provide a manner for indicating a number of the NSTR link pairs supported by the NSTR mobile AP MLD.

The additional aspects and advantages of the present disclosure will be partially given in the following description, which will become apparent from the following description, or will be learned through the practice of the present disclosure.

### BRIEF DESCRIPTION OF THE DRAWINGS

In order to more clearly illustrate the technical solutions of the embodiments of the present disclosure, the accompanying drawings to be used in the description of the embodiments of the present disclosure will be briefly introduced below. Obviously, the drawings in the following description are only some embodiments of the present disclosure. For those of ordinary skill in the art, other drawings can also be obtained according to these drawings without paying creative effort.
FIG 1 is a first flow chart of a communication method provided by an embodiment of the present disclosure;
FIG 2 is a second flow chart of a communication method provided by an embodiment of the present disclosure;
FIG 3 is a third flowchart of a communication method provided in an embodiment of the present disclosure;
FIG 4 is a fourth flowchart of a communication method provided in an embodiment of the present disclosure;
FIG 5 is a fifth flowchart of a communication method provided by an embodiment of the present disclosure;
FIG 6 is a first schematic structural diagram of an electronic device provided by an embodiment of the present disclosure;
FIG 7 is a second schematic structural diagram of an electronic device provided by an embodiment of the present disclosure;
FIG 8 is a third schematic structural diagram of an electronic device provided by an embodiment of the present disclosure.

### DETAILED DESCRIPTION

In the present disclosure, the term "and/or" describes the association relationship of associated objects, which indicates that three relationships may exist. For example, A and/or B may represent three situations: A exists alone, A and B exist at the same time, and B exists alone. The character "/" generally indicates that the associated objects before and after are in an "or" relationship.

The term "a plurality of" in the embodiments of the present disclosure refers to two or more than two, and other quantifiers are similar thereto.

Exemplary embodiments will be described in detail herein, examples of which are represented in the accompanying drawings. When the following description relates to the drawings, the same numerals in different accompanying drawings represent the same or similar elements unless otherwise indicated. The implementations described in the following exemplary embodiments do not represent all implementations consistent with the present disclosure. To the contrary, they are merely examples of apparatuses and methods that are consistent with some aspects of the present disclosure, as detailed in the appended claims.

Terms used in the present disclosure are used solely for the purpose of describing certain embodiments and are not intended to limit the present disclosure. The singular forms of "a/an", "said" and "the" used in the embodiments of the present disclosure and the appended claims are also intended to include plural forms unless the context clearly indicates other meanings. It should also be understood that the term "and/or" used herein refers to and includes any or all possible combinations of one or more associated listed items.

It should be understood that although the terms first, second, third, etc. may be used to describe various information in the present disclosure, such information should not be limited to these terms. These terms are only used to distinguish the same type of information from each other. For example, without departing from the scope of the embodiments of the present disclosure, the first information may also be referred to as the second information, and similarly, the second information may also be referred to as the first information. Depending on the context, the word "if" as used herein may be interpreted as "when..." or "in the case..." or "in response to determination".

The technical solutions in the embodiments of the present disclosure will be clearly and completely described below with reference to the accompanying drawings in the embodiments of the present disclosure. Obviously, the described embodiments are only part of the embodiments of the present disclosure, and not all of the embodiments. Based on the embodiments in the present disclosure, all other embodiments obtained by those of ordinary skill in the art without creative work fall within the protection scope of the present disclosure.

The embodiments of the present disclosure provide a communication method, an electronic device, and a storage medium, which are used to provide a method for indicating a number of NSTR link pairs supported by an NSTR mobile AP MLD.

The method and the apparatus are based on a same application concept. Since the principles for solving the problem by the method and the apparatus are similar, the implementation of the apparatus and the method may refer to each other, and the repeated parts will not be described in detail.

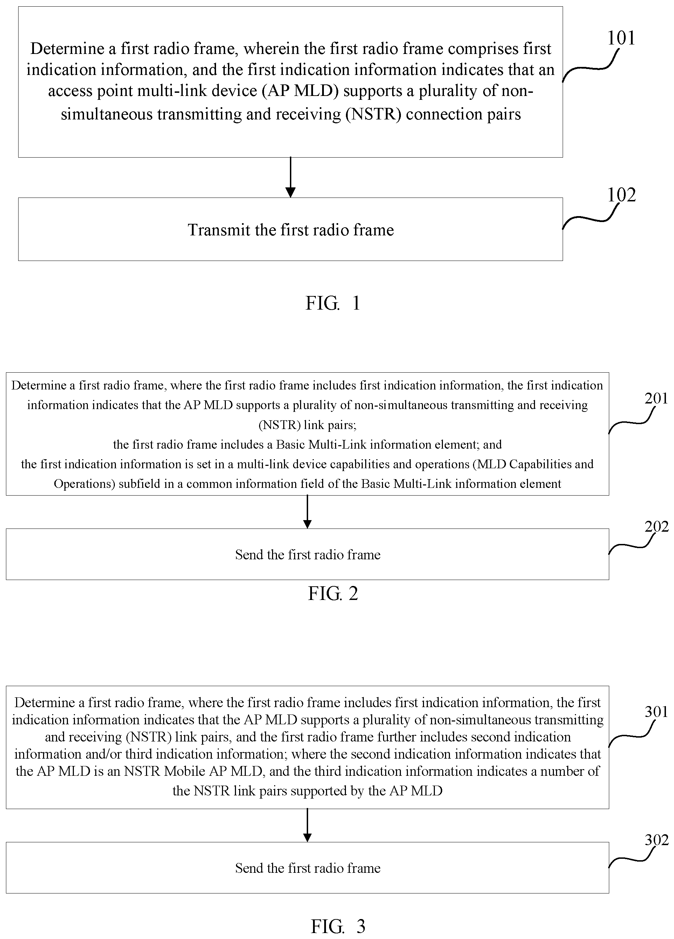

As shown in FIG 1, an embodiment of the present disclosure provides a communication method. Optionally, the method may be applied to a multi-link mobile access point device or a multi-link access point device (access point multi-link device, AP MLD), where the AP MLD is an NSTR mobile AP MLD. The method may include the following steps.

In step 101, a first radio frame is determined, where the first radio frame includes first indication information, and the first indication information indicates that the AP MLD supports a plurality of non-simultaneous transmitting and receiving (NSTR) link pairs;

Optionally, the first radio frame includes a Beacon frame or a Probe Response frame.

In a multi-connection (or link) scenario, a physical device may generally include a plurality of logical devices, each of which may independently manage data transmission and reception, and each logical device works independently on one link. However, due to the considerations in cost, energy saving and volume of the device, the anti-interference performance of the transceiver of some multi-link devices is poor. The transmission and reception of data between a plurality of links will cause greater interference, resulting in a situation that when the multi-link device sends data on one link, it is unable to receive data on the other link, and these links are referred to as a non-simultaneous transmitting and receiving (NSTR) pair. If the multi-link device is equipped with a higher-performance transceiver, the anti-interference ability of the transmission and reception of data between a plurality of links is very strong. When data is sent on one link, data may also be received on the other link. The data transmission and reception between the two links do not affect each other. These links are referred to as simultaneous transmitting and receiving (STR) link pairs.

In the NSTR scenario, the NSTR mobile AP MLD may designate one link in the NSTR link pair as a primary link and the other as a non-primary link. The NSTR mobile AP MLD schedules the transmission of a first radio frame and groups the addressed data frames only on the primary link. The NSTR mobile AP MLD may support one or more NSTR link pairs. For example, in the actual communication process, in the case where the NSTR mobile AP MLD supports a plurality of NSTR link pairs, if the communication quality of the primary link of the currently used NSTR link pair is poor, the non-primary link cannot be used, the NSTR mobile AP MLD then selects another link pair from other NSTR link pairs. The communication is then continued according to a pre-determined primary link and non-primary link in the newly selected link pair.

If the NSTR mobile AP MLD does not support a plurality of NSTR link pairs, it is necessary to re-determine an available NSTR link pair in this case, and to re-determine the pair of the primary link and non-primary link, which consumes a large amount of signaling and results in a waste of network resources.

Therefore, in the embodiments of the present disclosure, the first indication information is carried in the first radio frame, and the first indication information indicates that the AP MLD supports a plurality of non-simultaneous transmitting and receiving (NSTR) link pairs. On the one hand, during the establishment process of the multi-link, the first indication information identifies that the AP MLD supports a plurality of NSTR link pairs. On the other hand, the first indication information indicates that the AP MLD supports a plurality non-simultaneous transmitting and receiving (NSTR) link pairs, which is equivalent to indicating that the AP MLD is an NSTR mobile AP MLD by means of an implicit indication.

In step 102, the first radio frame is sent.

In the embodiments of the present disclosure, in a scenario where a plurality of links are established, an NSTR mobile AP MLD determines a first radio frame, first indication information is included in the first radio frame, and the first indication information indicates that the AP MLD supports a plurality of NSTR link pairs. The embodiments of the present disclosure provide a manner for indicating a number of the NSTR link pairs supported by the NSTR mobile AP MLD.

Referring to FIG 2, an embodiment of the present disclosure provides a communication method, which may be applied to an access point multi-link device (AP MLD). The method may include the following steps.

In step 201, a first radio frame is determined, where the first radio frame includes first indication information, the first indication information indicates that the AP MLD supports a plurality of non-simultaneous transmitting and receiving (NSTR) link pairs, and the first radio frame includes a Basic Multi-Link information element.

The first indication information is set in a multi-link device capabilities and operations (MLD Capabilities and Operations) subfield of a common information field in the Basic Multi-Link information element.

Optionally, the first radio frame includes a Beacon frame or a Probe Response frame, and the Beacon frame or the Probe Response frame includes the Basic Multi-Link information element.

The Basic Multi-Link information element includes the common information field, and the common information field includes the MLD Capabilities and Operations subfield. As a first example, the MLD Capabilities and Operations subfield is shown as the following Table 1.

**Table 1:**

| Content | Maximum Number Of Simultaneous Links | SRS Support | TID-To-Link Mapping Negotiation Supported | Frequency Separation For STR/AP MLD Type Indication | AAR Support | Reserved |
|---|---|---|---|---|---|---|
| Bits | 4 | 1 | 2 | 5 | 1 | 3 |
| Bits order | B0 to B3 | B4 | B5 to B6 | B7 to B11 | B12 | B13 to B15 |

For example, the Frequency Separation For STR/AP MLD Type Indication field of the MLD Capabilities and Operations subfield carries the first indication information therein.

Optionally, if the Frequency Separation For STR/AP MLD Type Indication field is set to 1, the first radio frame includes a reduced neighbor report (RNR) information element, and other NSTR link pairs are indicated in the RNR information element.

In step 202, the first radio frame is sent.

In the embodiments of the present disclosure, in a scenario where a plurality of links are established, an NSTR mobile AP MLD determines a first radio frame, includes first indication information in the first radio frame, and indicates that the AP MLD supports a plurality of NSTR link pairs via the first indication information. The embodiments of the present disclosure provide a manner for indicating a number of the NSTR link pairs supported by the NSTR mobile AP MLD.

Referring to FIG 3, an embodiment of the present disclosure provides a communication method, which may be applied to an access point multi-link device (AP MLD). The method may include the following steps.

In step 301, a first radio frame is determined, where the first radio frame includes first indication information, the first indication information indicates that the AP MLD supports a plurality of non-simultaneous transmitting and receiving (NSTR) link pairs, and the first radio frame further includes second indication information and/or third indication information.

The second indication information indicates that the AP MLD is an NSTR Mobile AP MLD.

The third indication information indicates a number of the NSTR link pairs supported by the AP MLD.

Referring to the aforementioned Table 1, the second indication information may be carried in the Frequency Separation For STR/AP MLD Type Indication part of the MLD Capabilities and Operations subfield (e.g., occupying B7 (Bits order)) to identify that the AP MLD is an NSTR mobile AP MLD. Optionally, the first indication information may occupy another bit (such as B8) to identify that the AP supports a plurality of NSTR link pairs.

The third indication information identifies the number of NSTR link pairs supported by the AP MLD. B9 to B11 may be used to identify the third indication information. For example, 001 identifies that the number of NSTR link pair supported by the AP MLD is 1, 010 identifies that the number of NSTR link pairs supported by the AP MLD is 2, and so on.

In step 302, the first radio frame is sent.

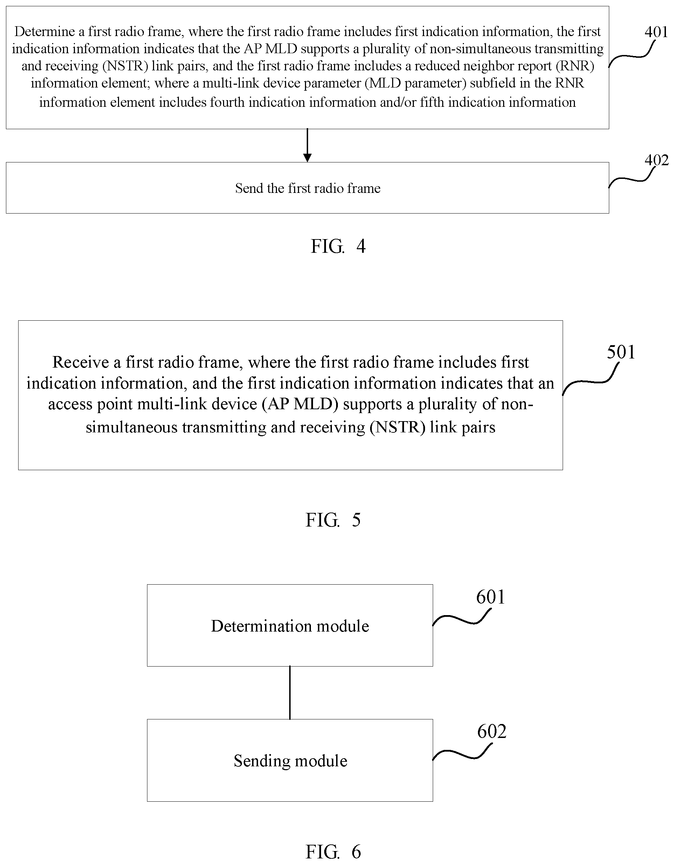

Referring to FIG 4, an embodiment of the present disclosure provides a communication method, which may be applied to an access point multi-link device (AP MLD). The method may include the following steps.

In step 401, a first radio frame is determined, where the first radio frame includes first indication information, the first indication information indicates that the AP MLD supports a plurality of non-simultaneous transmitting and receiving (NSTR) link pairs, and the first radio frame includes a reduced neighbor report (RNR) information element;

A multi-link device parameter (MLD parameter) subfield in the RNR information element includes fourth indication information and/or fifth indication information.

The fourth indication information indicates a primary link and/or a non-primary link in a primary NSTR link pair of the NSTR link pairs.

The fifth indication information indicates identification information of a candidate NSTR link pair of the NSTR link pairs.

The NSTR mobile AP MLD identifies the primary link and/or the non-primary link via the fourth indication information of the MLD parameter subfield in the RNR information element. For example, it carries the link ID of the primary link and the link ID of the non-primary link. Alternatively, it carries one of the link ID of the primary link and the link ID of the non-primary link, for example, it only carries the link ID of the primary link, and the corresponding non-primary link is determined according to the identification information of the NSTR link pair. In addition, the fourth indication information may indicate a media access control (MAC) address of the primary link and/or a MAC address of the non-primary link.

The fifth indication information indicates the identification information of the candidate NSTR link pair of the NSTR link pairs, and the candidate NSTR link pair indicates an NSTR link pair that is not currently in use.

As a second example, the fourth indication information and/or the fifth indication information may be carried in an MLD parameter subfield of a target beacon transmission time (TBTT) information field in the RNR information element. The format of the TBTT information field is shown in Table 2.

**Table 2**

| Information content | Neighbor AP TBTT Offset | Basic Service Set Identifier (BSSID) (optional) | Short Service Set Identifier (Short SSID) (optional) | Basic Service Set Parameters (BSS parameters) | Maximum Transmit Power (20M PSD) | Multi-link Device Parameter (MLD parameter) |
|---|---|---|---|---|---|---|
| Number of octets | 1 | 0 or 6 | 0 or 4 | 0 or 1 | 0 or 1 | 0 or 3 |

The 20 MHz PSD subfield indicates a maximum transmit power for a default category.

In step 402, the first radio frame is sent.

In an optional embodiment, the MLD parameter subfield further includes:
link identifiers of candidate links of the candidate NSTR link pair and sixth indication information, where the sixth indication information indicates a primary link and/or a non-primary link of the candidate NSTR link pair.

The bits in the MLD parameter subfield are used to carry the link identifiers of the candidate links of the NSTR link pair, and the sixth indication information is carried in the MLD parameter subfield to indicate the primary link and/or non-primary link in the candidate links. For example, it carries the link ID of the primary link and the link ID of the non-primary link. Alternatively, it carries one of the link ID of the primary link and the link ID of the non-primary link, for example, it only carries the link ID of the primary link, and the corresponding non-primary link is determined according to the identification information of the NSTR link pair. Optionally, the sixth indication information may indicate the MAC address of the primary link and/or the MAC address of the non-primary link.

In an optional embodiment, the first radio frame further includes candidate order information indicating the candidate NSTR link pair.

The candidate order information includes: seventh indication information set in the MLD parameter subfield, or arrangement position information of the candidate NSTR link pair in the MLD parameter subfield.

In the case where more than two candidate NSTR link pairs are included, the order information of using each candidate NSTR link may also be identified in the first radio frame. For example, one or more bits are additionally occupied in the first radio frame to identify the seventh indication information, and the seventh indication information indicates the candidate order information. Alternatively, the candidate order information is determined according to the arrangement position of each candidate NSTR link pair, for example, the candidate order of the first-ranked candidate NSTR link pair is also 1.

In the embodiments of the present disclosure, in a scenario where a plurality of links are established, an NSTR mobile AP MLD determines a first radio frame, includes first indication information in the first radio frame, and indicates that the AP MLD supports a plurality of NSTR link pairs via the first indication information.

Referring to FIG 5, an embodiment of the present disclosure provides a communication method, which may be applied to a multi-link station device (non-access point multi-link device, Non-AP MLD). The method may include the following steps.

In step 501, a first radio frame is received; where the first radio frame includes first indication information, and the first indication information indicates that an access point multi-link device (AP MLD) supports a plurality of non-simultaneous transmitting and receiving (NSTR) link pairs.

Optionally, the first radio frame includes a Beacon frame or a Probe Response frame.

In a multi-connection (or link) scenario, a physical device may generally include a plurality of logical devices, each of which may independently manage data transmission and reception, and each logical device works independently on one link. However, due to the considerations in cost, energy saving and volume of the device, the anti-interference performance of the transceiver of some multi-link devices is poor. The transmission and reception of data between a plurality of links will cause greater interference, resulting in a situation that when the multi-link device sends data on one link, it is unable to receive data on the other link, and these links are referred to as a non-simultaneous transmitting and receiving (NSTR) link pair. If the multi-link device is equipped with a higher-performance transceiver, the anti-interference ability of the transmission and reception of data between a plurality of links is very strong. When data is sent on one link, data may also be received on the other link. The data transmission and reception between the two links do not affect each other. These links are referred to as simultaneous transmitting and receiving (STR) link pairs.

In the NSTR scenario, the NSTR mobile AP MLD may designate one link in the NSTR link pair as a primary link and the other as a non-primary link. The NSTR mobile AP MLD schedules the transmission of a first radio frame and groups the addressed data frames only on the primary link. The NSTR mobile AP MLD may support one or more NSTR link pairs. For example, in the actual communication process, in the case where the NSTR mobile AP MLD supports a plurality of NSTR link pairs, if the communication quality of the primary link of the currently used NSTR link pair is poor, the non-primary link cannot be used, the NSTR mobile AP MLD then selects another link pair from other NSTR link pairs. The communication is then continued according to a pre-determined primary link and non-primary link in the newly selected link pair.

If the NSTR mobile AP MLD does not support a plurality of NSTR link pairs, it is necessary to re-determine an available NSTR link pair in this case, and to re-determine the pair of the primary link and non-primary link, which consumes a large amount of signaling and results in a waste of network resources.

Therefore, in the embodiments of the present disclosure, the Non-AP MLD receives a first radio frame and obtains the first indication information carried in the first radio frame, where the first indication information indicates that the AP MLD supports a plurality of non-simultaneous transmitting and receiving (NSTR) link pairs. On the one hand, during the establishment process of the multi-link, the first indication information identifies that the AP MLD supports a plurality of NSTR link pairs. On the other hand, the first indication information indicates that the AP MLD supports a plurality non-simultaneous transmitting and receiving (NSTR) link pairs, which is equivalent to indicating that the AP MLD is an NSTR mobile AP MLD by means of an implicit indication.

Optionally, in an implementation of the present disclosure, the first radio frame includes a Basic Multi-Link information element.

The first indication information is set in a multi-link device capabilities and operations (MLD Capabilities and Operations) subfield of a common information field in the Basic Multi-Link information element.

Optionally, in an implementation of the present disclosure, the first radio frame further includes second indication information and/or third indication information.

The second indication information indicates that the AP MLD is an NSTR Mobile AP MLD.

The third indication information indicates a number of the NSTR link pairs supported by the AP MLD.

Optionally, in an implementation of the present disclosure, the first radio frame includes a reduced neighbor report (RNR) information element.

A multi-link device parameter (MLD parameter subfield) in the RNR information element includes fourth indication information and/or fifth indication information.

The fourth indication information indicates a primary link and/or a non-primary link in a primary NSTR link pair of the NSTR link pairs.

The fifth indication information indicates identification information of a candidate NSTR link pair of the NSTR link pairs.

Optionally, in an implementation of the present disclosure, the MLD parameter subfield further includes:

link identifiers of candidate links of the candidate NSTR link pair and sixth indication information, where the sixth indication information indicates a primary link and/or a non-primary link of the candidate NSTR link pair.

Optionally, in an implementation of the present disclosure, the first radio frame further includes candidate order information indicating the candidate NSTR link pair.

The candidate order information includes: seventh indication information set in the MLD parameter subfield, or arrangement position information of the candidate NSTR link pair in the MLD parameter subfield.

Optionally, in an implementation of the present disclosure, the first radio frame includes a Beacon frame or a Probe Response frame.

In the embodiments of the present disclosure, in a scenario where a plurality of links are established, a Non- AP MLD receives a first radio frame, where the first radio frame includes first indication information, and the AP MLD supporting a plurality of NSTR link pairs is indicated via the first indication information. The embodiments of the present disclosure provide a manner for indicating a number of the NSTR link pairs supported by the NSTR mobile AP MLD.

Referring to FIG 6, based on the same principle as the methods provided in the embodiments of the present disclosure, an embodiment of the present disclosure further provides an electronic device, the electronic device is an access point multi-link device (AP MLD), and the electronic device includes:
a determination module 601, configured to determine a first radio frame, where the first radio frame includes first indication information, and the first indication information indicates that the AP MLD supports a plurality of non-simultaneous transmitting and receiving (NSTR) link pairs; and
a sending module 602, configured to send the first radio frame.

Optionally, in an implementation of the present disclosure, the first radio frame includes a Basic Multi-Link information element.

The first indication information is set in a multi-link device capabilities and operations (MLD Capabilities and Operations) subfield of a common information field in the Basic Multi-Link information element.

Optionally, in an implementation of the present disclosure, the first radio frame further includes second indication information and/or third indication information.

The second indication information indicates that the AP MLD is an NSTR Mobile AP MLD.

The third indication information indicates a number of the NSTR link pairs supported by the AP MLD.

Optionally, in an implementation of the present disclosure, the first radio frame includes a reduced neighbor report (RNR) information element.

A multi-link device parameter (MLD parameter subfield) in the RNR information element includes fourth indication information and/or fifth indication information.

The fourth indication information indicates a primary link and/or a non-primary link in a primary NSTR link pair of the NSTR link pairs.

The fifth indication information indicates identification information of a candidate NSTR link pair of the NSTR link pairs.

Optionally, in an implementation of the present disclosure, the MLD parameter subfield further includes:
link identifiers of candidate links of the candidate NSTR link pair and sixth indication information, where the sixth indication information indicates a primary link and/or a non-primary link of the candidate NSTR link pair.

Optionally, in an implementation of the present disclosure, the first radio frame further includes candidate order information indicating the candidate NSTR link pair.

The candidate order information includes: seventh indication information set in the MLD parameter subfield, or arrangement position information of the candidate NSTR link pair in the MLD parameter subfield.

Optionally, in an implementation of the present disclosure, the first radio frame includes a Beacon frame or a Probe Response frame.

In the embodiment of the present disclosure, in a scenario where a plurality of links are established, the determination module 601 determines the first radio frame, and the sending module 602 sends the first radio frame, where the first radio frame includes first indication information, and it is indicated that the AP MLD supports a plurality of NSTR link pairs via the first indication information.

An embodiment of the present disclosure further provides a communication apparatus, which is applied to an access point multi-link device (AP MLD). The apparatus includes:
a radio frame determination module, configured to determine a first radio frame, where the first radio frame includes first indication information, and the first indication information indicates that the AP MLD supports a plurality of non-simultaneous transmitting and receiving (NSTR) link pairs; and
a radio frame sending module, configured to send the first radio frame.

The apparatus also includes other modules of the electronic device in the foregoing embodiment, which will not be repeated herein.

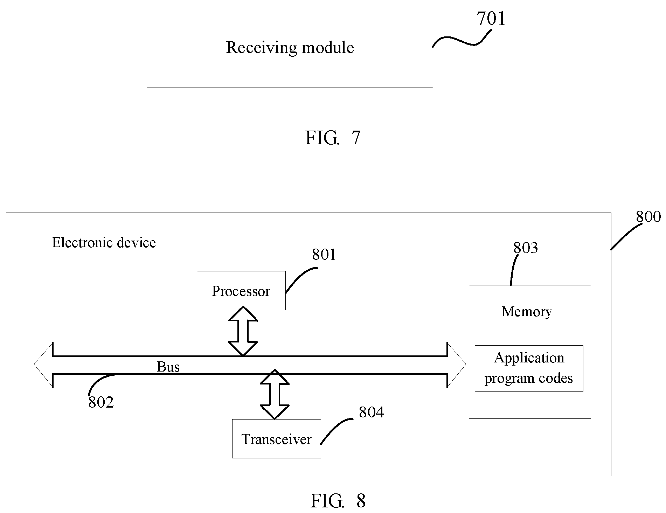

Referring to FIG 7, based on the same principle as the methods provided in the embodiments of the present disclosure, an embodiment of the present disclosure further provides an electronic device, the electronic device is a multi-link station device (Non-AP MLD), and the electronic device includes:
a receiving module 701, configured to receive a first radio frame, where the first radio frame includes first indication information, and the first indication information indicates that an access point multi-link device (AP MLD) supports a plurality of non-simultaneous transmitting and receiving (NSTR) link pairs.

An embodiment of the present disclosure also provides a communication apparatus, which is applied to a multi-link station device (Non-AP MLD), and the apparatus includes:
a radio frame receiving module, configured to receive a first radio frame, where the first radio frame includes first indication information, and the first indication information indicates that an access point multi-link device (AP MLD) supports a plurality of non-simultaneous transmitting and receiving (NSTR) link pairs.

The apparatus also includes other modules of the electronic device in the foregoing embodiment, which will not be repeated herein.

In an optional embodiment, an embodiment of the present disclosure further provides an electronic device. As shown in FIG 8, the electronic device 800 shown in FIG 8 may be a server, which includes: a processor 801 and a memory 803. The processor 801 and the memory 803 are connected, such as connected through a bus 802. Optionally, the electronic device 800 may further include a transceiver 804. It should be noted that in actual applications, the number of transceiver 804 is not limited to one, and the structure of the electronic device 800 does not constitute a limitation on the embodiments of the present disclosure.

The processor 801 may be a central processing unit (CPU), a general-purpose processor, a digital signal processor (DSP), an application specific integrated circuit (ASIC), a field programmable gate array (FPGA) or other programmable logic devices, transistor logic devices, hardware components or any combination thereof. It may implement or execute various exemplary logic blocks, modules and circuits described with reference to the disclosure of the present disclosure. The processor 801 may also be a combination that implements computing functions, such as a combination of one or more microprocessors, a combination of a DSP and a microprocessor, etc.

The bus 802 may include a path for transmitting information among the above components. The bus 802 may be a peripheral component interconnect (PCI) bus or an extended industry standard architecture (EISA) bus, etc. The bus 802 may be categorized as an address bus, a data bus, a control bus, etc. For ease of representation, only one bold line is used to represent the bus in FIG .8, but it does not mean that there is only one bus or one type of bus.

The memory 803 may be a read only memory (ROM) or other types of static storage devices that can store static information and instructions, a random access memory (RAM) or other types of dynamic storage devices that can store information and instructions, or an electrically erasable programmable read only memory (EEPROM), a compact disc read only memory (CD-ROM) or other optical disk storage, a disk storage (including a compressed optical disk, a laser disk, an optical disk, a digital versatile disk, a Blu-ray disk, etc.), a magnetic disk storage medium or other magnetic storage device, or any other medium that can be used to carry or store the desired program code in the form of instructions or data structures and can be accessed by a computer, but is not limited thereto.

The memory 803 is configured to store application program codes for executing the solutions of the present disclosure, and the execution is controlled by the processor 801. The processor 801 is configured to execute the application program codes stored in the memory 803 to implement the content shown in the above method embodiments.

The electronic device includes, but is not limited to, a mobile terminal such as a mobile phone, a laptop computer, a digital broadcast receiver, a personal digital assistant (PDA), a tablet computer (PAD), a portable multimedia player (PMP), a vehicle-mounted terminal (such as a vehicle-mounted navigation terminal), etc., and a fixed terminal such as a digital TV, a desktop computer, etc. The electronic device shown in FIG 8 is merely an example and should not impose any limitation to the functions and scope of use of the embodiments of the present disclosure.

The server provided by the present disclosure may be an independent physical server, or a server cluster composed of a plurality of physical servers or a distributed system, or a cloud server that provides basic cloud computing services such as cloud services, cloud databases, cloud computing, cloud functions, cloud storage, network services, cloud communications, middleware services, domain name services, security services, CDN, big data and artificial intelligence platforms, etc. The terminal may be a smart phone, a tablet computer, a laptop computer, a desktop computer, a smart speaker, a smart watch, etc., but is not limited thereto. The terminal and the server may be directly or indirectly connected via wired or wireless communication manner, which is not limited by the present disclosure herein.

An embodiment of the present disclosure provides a computer-readable storage medium having a computer program stored thereon, which, when run on a computer, enables the computer to execute the corresponding contents of the foregoing method embodiments.

It should be understood that, although the individual steps in the flowchart of the accompanying drawings are shown in sequence as indicated by the arrows, these steps are not necessarily executed in sequence in the order indicated by the arrows. Unless otherwise specified herein, the execution of these steps is not strictly limited in order, and they may be executed in other orders. Moreover, at least a part of the steps in the flowchart of the accompanying drawings may include a plurality of sub-steps or a plurality of phases, and these sub-steps or phases are not necessarily executed at the same time, but can be executed at different times, and the execution order thereof is not necessarily sequential, but may be executed in turn or alternately with the other steps or at least a portion of sub-steps or phases of the other steps.

It should be noted that the computer-readable medium mentioned above in the present disclosure may be a computer-readable signal medium or a computer-readable storage medium or any combination thereof. The computer-readable storage medium may be, for example, but not limited to, an electrical, magnetic, optical, electromagnetic, infrared, or semiconductor system, apparatus or device, or any combination thereof. More specific examples of computer-readable storage media may include, but are not limited to: an electrical connection with one or more wires, a portable computer disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, a computer-readable storage medium may be any tangible medium that contains or stores a program that may be used by or in combination with an instruction execution system, apparatus, or device. In the present disclosure, a computer-readable signal medium may include a data signal propagated in a baseband or as part of a carrier, which carries computer-readable program codes. The propagated data signal may take a variety of forms, including but not limited to electromagnetic signals, optical signals, or any suitable combination of the above. Computer readable signal media may also be any computer readable medium other than computer readable storage medium, which may send, propagate or transmit a program for use by or in conjunction with an instruction execution system, apparatus or device. The program codes contained on the computer readable medium may be transmitted by using any appropriate medium, including but not limited to: wires, optical cables, RF (radio frequency), etc., or any suitable combination of thereof.

The computer-readable medium may be included in the electronic device, or may stand alone without being installed in the electronic device.

The computer-readable medium carries one or more programs. When the one or more programs are executed by the electronic device, the electronic device executes the methods shown in the above embodiments.

According to an aspect of the present disclosure, a computer program product or a computer program is provided. The computer program product or the computer program includes computer instructions, and the computer instructions are stored in a computer-readable storage medium. The processor of the computer device reads the computer instructions from the computer-readable storage medium, and the processor executes the computer instructions, so that the computer device executes the methods provided in the above-mentioned various optional implementations.

Computer program codes for performing the operations of the present disclosure may be written in one or more programming languages or combinations thereof, including object-oriented programming languages - such as Java, Smalltalk, C++, and conventional procedural programming languages such as "C" language or similar programming languages. The program codes may be executed entirely on the user's computer, partially on the user's computer, as a stand-alone software package, partially on the user's computer and partially on a remote computer, or entirely on a remote computer or server. In situations involving remote computers, the remote computer may be connected to the user's computer via any kind of network, including a local area network (LAN) or a wide area network (WAN), or it may be connected to an external computer (e.g., via the Internet by using an Internet service provider).

The flow charts and block diagrams in the accompanying drawings illustrate the possible architectures, functions and operations of the systems, methods and computer program products that may be implemented in accordance with various embodiments of the present disclosure. In this regard, each square box in the flow chart or block diagram may represent a module, a program segment or a part of codes, and the module, the program segment or the part of the codes contains one or more executable instructions for implementing a specified logical function. It should also be noted that in some implementations as replacements, the functions marked in the square box may also occur in a sequence different from that marked in the accompanying drawings. For example, two consecutively represented boxes may actually be executed substantially in parallel, and they may sometimes be executed in the reverse order, depending on the functions involved. It should also be noted that each square box in the block diagram and/or flow chart, and the combination of the square boxes in the block diagram and/or flow chart may be implemented with a dedicated hardware-based system that performs a specified function or operation, or may be implemented with a combination of dedicated hardware and computer instructions.

The modules involved in the embodiments described in the present disclosure may be implemented by software or hardware. The name of a module does not constitute a limitation of the module itself in a certain case. For example, module A may also be described as "a module A for performing an operation B".

The above description is an illustration of the preferred embodiments of the present disclosure and the technical principles used. Those skilled in the art should understand that the scope of disclosure involved in the present disclosure is not limited to the technical solutions formed by a specific combination of the above technical features, but should also cover other technical solutions formed by any combination of the above technical features or their equivalent features without departing from the above disclosed concept, for example, a technical solution formed by interchanging the above features with (but not limited to) technical features with similar functions disclosed in the present disclosure.

## Claims

1. A communication method, applied to an access point multi-link device (AP MLD), wherein the method comprises:
determining a first radio frame; wherein the first radio frame comprises first indication information, and the first indication information indicates that the AP MLD supports multiple non-simultaneous transmitting and receiving (NSTR) link pairs; and
sending the first radio frame.

2. The communication method according to claim 1, wherein the first radio frame comprises a Basic Multi-Link information element; and
the first indication information is set in a multi-link device capabilities and operations (MLD Capabilities and Operations) subfield in a common information field in the Basic Multi-Link information element.

3. The communication method according to claim 1, wherein the first radio frame further comprises second indication information and/or third indication information;
wherein the second indication information indicates that the AP MLD is an NSTR Mobile AP MLD; and
the third indication information indicates a number of the NSTR link pairs supported by the AP MLD.

4. The communication method according to claim 1, wherein the first radio frame comprises a reduced neighbor report (RNR) information element;
wherein a multi-link device parameter (MLD parameter) subfield in the RNR information element comprises fourth indication information and/or fifth indication information;
the fourth indication information indicates a primary link and/or a non-primary link in a primary NSTR link pair in the NSTR link pairs; and
the fifth indication information indicates identification information of a candidate NSTR link pair in the NSTR link pairs.

5. The communication method according to claim 4, wherein the MLD parameter subfield further comprises:
link identifiers of candidate links of the candidate NSTR link pair and sixth indication information, wherein the sixth indication information indicates a primary link and/or a non-primary link of the candidate NSTR link pair.

6. The communication method according to claim 4, wherein the first radio frame further comprises candidate order information indicating the candidate NSTR link pair;
wherein the candidate order information comprises: seventh indication information set in the MLD parameter subfield, or arrangement position information of the candidate NSTR link pair in the MLD parameter subfield.

7. The communication method according to any one of claims 1 to 6, wherein the first radio frame comprises a Beacon frame or a Probe Response frame.

8. A communication method, applied to a multi-link station device (Non-AP MLD), wherein the method comprises:
receiving a first radio frame; wherein the first radio frame comprises first indication information, and the first indication information indicates that an access point multi-link device (AP MLD) supports multiple non-simultaneous transmitting and receiving (NSTR) link pairs.

9. An electronic device, wherein the electronic device is an access point multi-link device (AP MLD), and the electronic device comprises:
a determination module, configured to determine a first radio frame; wherein the first radio frame comprises first indication information, and the first indication information indicates that the AP MLD supports multiple non-simultaneous transmitting and receiving (NSTR) link pairs; and
a sending module, configured to send the first radio frame.

10. An electronic device, wherein the electronic device is a multi-link station device (Non-AP MLD), and the electronic device comprises:
a receiving module, configured to receive a first radio frame; wherein the first radio frame comprises first indication information, and the first indication information indicates that an access point multi-link device (AP MLD) supports multiple non-simultaneous transmitting and receiving (NSTR) link pairs.

11. An electronic device, comprising a memory, a processor and a computer program stored in the memory and runnable on the processor, wherein the processor, when executing the program, implements the method according to any one of claims 1 to 7 or the method according to claim 8.

12. A computer-readable storage medium, wherein a computer program is stored on the computer-readable storage medium, and the computer program implements the method according to any one of claims 1 to 7 or the method according to claim 8 when being executed by a processor.
